# FASCICULE DE BREVET EUROPEEN

(11) **EP 1 749 977 B1**
(45) Date de publication et mention de la délivrance du brevet: **08.10.2014**
(21) Numéro de dépôt: 06118249.9
(22) Date de dépôt: 01.08.2006
(51) Int. Cl.: F01D 25/16, F01D 25/18

(54) **SYSTEME D'ETANCHEITE DE LA CHAMBRE DE LUBRIFICATION ARRIERE D'UN TURBOREACTEUR**
DICHTUNGSSYSTEM DES HINTEREN LAGERGEHÄUSES EINES STRAHLTRIEBWERKS
JET ENGINE REAR BEARING LUBRICATION CHAMBER SEALING SYSTEM

(30) Priorité: 02.08.2005 FR 0508232
(43) Date de publication de la demande: 07.02.2007
(73) Titulaire: SNECMA, 75015 Paris (FR)
(72) Inventeur: BART, Jacques, 91370, VERRIERES-LE-BUISSON (FR); ROUSSELIN, Stéphane, 77850, HERICY (FR)
(74) Mandataire: Intès, Didier Gérard André

(56) Documents cités:
- EP-A- 0 391 001
- CH-A- 327 444
- FR-A- 2 028 999
- FR-A- 2 524 064
- GB-A- 2 366 842

## Description

L'invention se rapporte à un turboréacteur et concerne notamment la lubrification du ou des roulements situés dans une chambre de lubrification arrière définie entre la turbine basse pression et l'arbre entraîné par cette dernière.

Dans un turboréacteur classique, on lubrifie le roulement supportant l'arbre entraîné par la turbine basse pression en entretenant un brouillard d'huile dans une chambre de lubrification entourant ledit roulement. Ladite chambre de lubrification comporte nécessairement un premier joint d'étanchéité tournant puisqu'elle est définie entre une partie fixe couramment appelée carter d'échappement et une partie tournante constituée par l'extrémité aval de l'arbre.

Dans la suite du texte, on utilise les termes "amont" ou "aval" pour désigner les emplacements des éléments de structure les uns par rapport aux autres en considérant le sens d'écoulement des gaz dans le turboréacteur.

La chambre de lubrification est elle-même entourée, radialement vers l'extérieur, par plusieurs chambres de récupération, généralement deux, prévues pour empêcher que d'éventuelles fuites d'huile s'accumulent dans d'autres parties du moteur, notamment dans le rotor de la turbine basse pression.

Plus précisément, ledit premier joint d'étanchéité est souvent du type labyrinthe ; il établit la liaison entre partie fixe et partie mobile de la chambre de lubrification. Cette dernière est entourée d'une première chambre de récupération dont la partie mobile est elle-même fermée par deux joints d'étanchéité de type labyrinthe, à savoir le premier joint d'étanchéité cité et un second installé entre la partie tournante de la première chambre de récupération et une partie fixe d'une seconde chambre de récupération entourant la première. Un troisième joint d'étanchéité est installé entre l'arbre et la partie fixe de cette seconde chambre de récupération.

La première chambre de récupération est pressurisée par de l'air provenant de l'amont du moteur. Cette pressurisation entretient une différence de pression entre la chambre de lubrification et ladite première chambre de récupération, ce qui évite pour l'essentiel les fuites d'huile vers ladite première chambre de récupération.

En cas de fuite au niveau dudit premier joint d'étanchéité, l'huile s'accumule dans ladite première chambre de récupération et est évacuée en partie basse de celle-ci.

En cas de fuite plus importante, l'huile peut traverser le joint qui sépare la première chambre de récupération de la seconde et s'accumuler dans celle-ci. Elle est récupérée par un autre collecteur situé en partie basse de ladite seconde chambre de récupération.

Cette architecture connue, à deux chambres de récupération coaxiales est complexe, coûteuse (trois joints d'étanchéité tournants et deux chambres de récupération) et augmente la masse du moteur.

En outre, dans certains cas extrêmes, il n'est pas exclu, que de l'huile s'échappe par le joint qui sépare la deuxième chambre de récupération de la partie arrière de l'arbre, en un point situé à l'intérieur du moyeu du rotor. Dans ce cas, l'huile vient s'accumuler sans possibilité d'évacuation entre les disques du rotor, ce qui génère un risque de "balourd d'huile" déséquilibrant ledit rotor.

Par ailleurs, on connaît du brevet FR 2 524 064 un dispositif de graissage et de refroidissement pour un pallier inter-arbres.

L'invention permet de remédier à tous ces inconvénients. Elle propose une architecture à la fois plus simple, puisqu'elle ne présente qu'une seule chambre de récupération, et plus efficace puisqu'elle est adaptée à empêcher toute fuite d'huile vers l'intérieur du rotor de la turbine.

Plus précisément, l'invention concerne un turboréacteur selon la revendication 1, notamment un turboréacteur comprenant un arbre entraîné par une turbine superposée coaxialement et à l'extérieur dudit arbre, lequel est supporté, à l'arrière, par un roulement situé dans une chambre de lubrification dans laquelle un brouillard d'huile est entretenu, ladite chambre de lubrification comportant une partie tournante, intérieure, liée à l'arbre et une partie fixe, extérieure, séparées par un premier joint d'étanchéité annulaire, et une chambre de récupération pressurisée, agencée à l'extérieur dudit premier joint d'étanchéité et comportant deux parties, une partie fixe et une partie mobile séparées par ledit premier joint d'étanchéité, caractérisé en ce que ladite chambre de récupération est unique et comporte un second joint d'étanchéité, situé radialement extérieurement par rapport audit premier joint et en ce que ledit second joint d'étanchéité est situé en aval du rotor de ladite turbine.

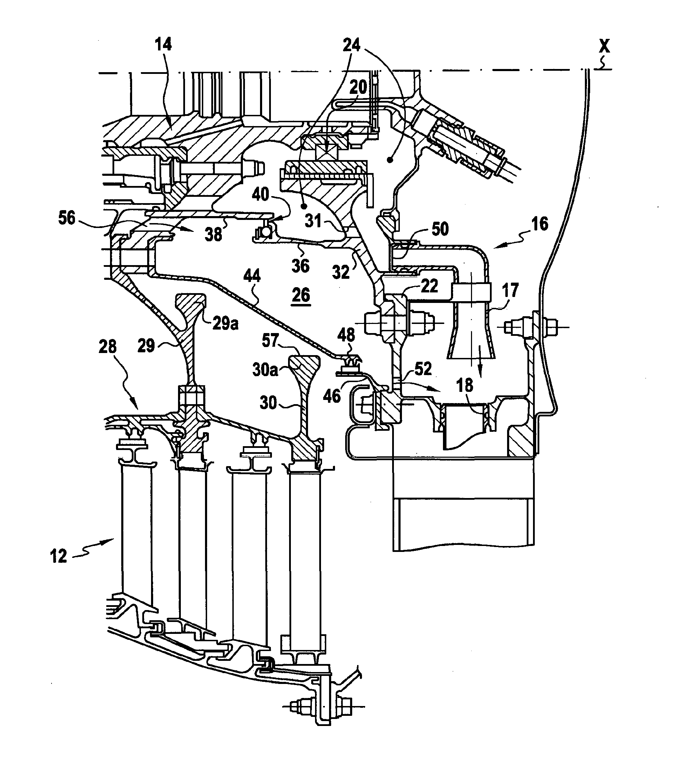

L'invention sera mieux comprise et d'autres avantages de celle-ci apparaîtront plus clairement à la lumière de la description qui va suivre d'un turboréacteur conforme à son principe, donnée uniquement à titre d'exemple et faite en référence au dessin annexé dans lequel :
- la figure unique est une demi-coupe partielle de la partie arrière du turbo-réacteur.

En se reportant au dessin, on a représenté la partie arrière d'un turboréacteur, notamment la turbine basse pression 12 et l'arbre 14, d'axe X qu'elle entraîne en rotation. En aval de ces éléments coaxiaux, on a représenté les éléments essentiels d'un carter d'échappement 16, abritant entre autres des moyens de drainage et de récupération d'huile 17, 18.

Entre l'arbre 14 et la turbine 12, on trouve le roulement arrière 20 de l'arbre 14 dont la partie fixe est supportée par la paroi 22 du carter d'échappement 16. Une chambre de lubrification 24 entoure ce roulement 20. Une unique chambre de récupération 26 entoure la chambre de lubrification 24, radialement à l'extérieur de celle-ci.

La turbine comporte un rotor 28 muni d'une pluralité de disques 29, 30 espacés axialement et comportant chacun un anneau de renfort 29a, 30a dans sa partie radialement la plus interne.

La chambre de lubrification 24 est définie entre l'extrémité arrière de l'arbre 14 et la paroi 22 du carter d'échappement. Un support 32 sensiblement conique s'étend entre la paroi 22 du carter et la partie fixe du roulement. Il est percé de trous 31 permettant la diffusion du brouillard d'huile dans toute la chambre de lubrification, c'est-à-dire de part et d'autre du roulement.

Un élément de paroi fixe 36, sensiblement cylindrique, s'étend vers l'amont à partir dudit support 32. Un élément de paroi tournant 38, sensiblement cylindrique faisant saillie à l'arrière de l'arbre s'étend vers l'aval en direction de l'élément de paroi fixe 36. Il est situé quelque peu radialement à l'intérieur de l'élément de paroi fixe. Les deux extrémités de ces éléments de paroi se chevauchent et un premier joint d'étanchéité 40, tournant, est installé entre ces deux extrémités. Ce joint peut être du type labyrinthe, classique. On utilisera de préférence un joint à brosse en carbone qui garantit une meilleure étanchéité pour cet usage.

Un élément de paroi mobile 44, globalement conique, s'élargissant d'amont en aval, s'étend à partir de l'extrémité de l'arbre 14, jusqu'à l'extérieur du rotor, axialement, c'est-à-dire jusqu'à un point situé en aval du dernier disque 30 dudit rotor. L'élément de paroi mobile 44 conique s'étend sensiblement jusqu'à la même distance radiale que celle où se situe l'anneau de renfort 30a du dernier disque de la turbine.

Un élément de paroi fixe 46 solidaire du carter 16 s'étend vers l'amont en direction de l'élément de paroi mobile 44. Les deux extrémités de ces éléments de paroi se chevauchent (l'élément de paroi fixe étant ici situé radialement à l'extérieur de l'élément de paroi mobile) et un second joint d'étanchéité tournant 48 est installé entre ces deux extrémités. Ce joint peut être du type à labyrinthe classique.

Autrement dit, selon une caractéristique importante de l'invention, ledit second joint d'étanchéité 48 se situe en aval du rotor de la turbine.

Ainsi, la chambre de récupération unique 26 est définie entre des éléments de parois fixes 32, 36 et mobiles 38, 44 et elle est fermée par les deux joints 40, 48 mentionnés ci-dessus.

Un orifice d'évacuation 50 est prévu en partie basse de la chambre de lubrification 24 et un orifice d'évacuation 52 est prévu en partie basse de la chambre de récupération 26. Les deux flux se rejoignent dans le carter. Comme cela est visible sur le dessin, l'orifice d'évacuation 52 de ladite chambre de récupération se situe à une distance radiale légèrement plus grande que celle où se situe ledit second joint d'étanchéité. Une pompe peut y être connectée.

De l'air provenant de l'amont pénètre par des canaux 56 dans la chambre de récupération, pour maintenir celle-ci en surpression par rapport à la chambre de lubrification 24. Le second joint d'étanchéité est radialement à l'extérieur par rapport au premier. Ledit second joint d'étanchéité 48 se situe à une distance radiale plus grande que celle où se situe l'alésage 57 de l'anneau 30 le plus en aval de ladite turbine.

En cas de passage d'huile dans la chambre de récupération 26, celle-ci s'accumule en dessous du second joint d'étanchéité 48 avant d'être évacuée en partie basse par l'orifice 52. Si une partie de l'huile s'échappe de ladite chambre de récupération à travers ledit second joint 48, le positionnement de ce dernier, à une distance radiale plus grande que l'alésage 57 du dernier disque de la turbine, permet d'éviter toute introduction d'huile dans le rotor. Cette huile sera évacuée dans la veine en aval de la turbine basse pression.

## Revendications

1. Turboréacteur comprenant un arbre (14) entraîné par une turbine basse pression (12) dans lequel l'arbre est supporté, à l'arrière, par un roulement (20) logé dans une chambre de lubrification (24) dans laquelle un brouillard d'huile est entretenu, ladite chambre de lubrification comportant une partie tournante, intérieure, liée à l'arbre et une partie fixe, extérieure, séparées par un premier joint d'étanchéité annulaire (40), et une chambre de récupération (26) pressurisée, agencée à l'extérieur dudit premier joint d'étanchéité et comportant deux parties, une partie fixe et une partie mobile séparées par ledit premier joint d'étanchéité, où la turbine basse pression (12) est superposée coaxialement et à l'extérieur dudit arbre (14), ledit roulement (20) est situé entre ledit arbre et ladite turbine basse pression, ladite chambre de récupération (26) est unique et comporte un second joint d'étanchéité (48), situé radialement extérieurement par rapport audit premier joint, ledit second joint d'étanchéité (48) est situé en aval du rotor de ladite turbine et un orifice d'évacuation d'huile (52) est prévu en partie basse de ladite chambre de récupération (26).

2. Turboréacteur selon la revendication 1, dans lequel ladite turbine basse pression comporte un rotor muni d'une pluralité de disques (29, 30) espacés axialement et comportant chacun un anneau de renfort (29a, 30a) dans sa partie radialement la plus interne, **caractérisé en ce que** ledit second joint d'étanchéité (48) se situe à une distance radiale plus grande que celle où se situe l'anneau (30a) du disque le plus en aval de ladite turbine.

3. Turboréacteur selon la revendication 2, **caractérisé en ce que** ledit second joint d'étanchéité (48) se situe à une distance radiale plus grande que celle où se situe un alésage (57) de l'anneau (30) le plus en aval de ladite turbine.

4. Turboréacteur selon l'une quelconque des revendications 1 à 3, **caractérisé en ce que** la chambre de récupération (26) est l'unique chambre de récupération entourant la chambre de lubrification (24) et ledit arbre (14).

5. Turboréacteur selon l'une quelconque des revendications 2 à 4, **caractérisé en ce que** ledit premier joint d'étanchéité (40) se situe radialement à l'intérieur par rapport audit anneau (30a) du disque le plus en aval de ladite turbine.

6. Turboréacteur selon la revendication 1, dans lequel ladite turbine basse pression comporte un rotor muni d'une pluralité de disques (29, 30) espacés axialement et comportant chacun un anneau de renfort (29a, 30a) dans sa partie radialement la plus interne, **caractérisé en ce que** ledit premier joint d'étanchéité (40) se situe radialement à l'intérieur par rapport à un anneau (30a) du disque le plus en aval de ladite turbine.

## Patentansprüche

1. Turboreaktor, umfassend eine Welle (14), die von einer Niederdruckturbine (12) angetrieben wird, wobei die Welle hinten von einem Rollenlager (20) getragen wird, das in einer Schmierkammer (24) angeordnet ist, in der ein Ölnebel gehalten wird, wobei die Schmierkammer einen drehenden inneren Teil, der mit der Welle verbunden ist, und einen festen äußeren Teil umfasst, die durch eine erste Ringdichtung (40) getrennt sind, und eine Wiedergewinnungskammer (26) unter Druck, die außerhalb der ersten Dichtung angeordnet ist und zwei Teile umfasst, einen festen Teil und einen beweglichen Teil, die durch die erste Dichtung getrennt sind, wobei die Niederdruckturbine (12) koaxial und außerhalb der Welle (14) aufgesetzt ist, wobei das Rollenlager (20) zwischen der Welle und der Niederdruckturbine angeordnet ist, wobei die Wiedergewinnungskammer (26) die Einzige ist und eine zweite Dichtung (48) umfasst, die sich radial außerhalb in Bezug zu der ersten Dichtung befindet, wobei die zweite Dichtung (48) stromabwärts zum Rotor der Turbine angeordnet ist und eine Ölablassöffnung (52) im unteren Teil der Wiedergewinnungskammer (26) vorgesehen ist.

2. Turboreaktor nach Anspruch 1, bei dem die Niederdruckturbine einen Rotor umfasst, der mit einer Vielzahl von Scheiben (29, 30) versehen ist, die axial beabstandet sind und jeweils einen Verstärkungsring (29a, 30a) in ihrem radial innersten Teil umfassen, **dadurch gekennzeichnet, dass** die zweite Dichtung (48) in einem größeren radialen Abstand als jenem, in dem sich der Ring (30a) der am weitesten stromabwärts zur Turbine befindlichen Scheibe befindet, angeordnet ist.

3. Turboreaktor nach Anspruch 2, **dadurch gekennzeichnet, dass** die zweite Dichtung (48) in einem größeren radialen Abstand als jenem, in dem sich eine Bohrung (57) des am weitesten stromabwärts zur Turbine befindlichen Ringes (30) befindet, angeordnet ist.

4. Turboreaktor nach einem der Ansprüche 1 bis 3, **dadurch gekennzeichnet, dass** die Wiedergewinnungskammer (26) die einzige Wiedergewinnungskammer ist, die die Schmierkammer (24) und die Welle (14) umgibt.

5. Turboreaktor nach einem der Ansprüche 2 bis 4, **dadurch gekennzeichnet, dass** die erste Dichtung (40) radial innen in Bezug zum Ring (30a) der am weitesten stromabwärts befindlichen Scheibe der Turbine angeordnet ist.

6. Turboreaktor nach Anspruch 1, bei dem die Niederdruckturbine einen Rotor umfasst, der mit einer Vielzahl von Scheiben (29, 30) versehen ist, die axial beabstandet sind und jeweils einen Verstärkungsring (29a, 30a) in ihrem radial innersten Teil umfassen, **dadurch gekennzeichnet, dass** die erste Dichtung (40) radial innen in Bezug zu einem Ring (30a) der am weitesten stromabwärts befindlichen Scheibe der Turbine angeordnet ist.

## Claims

1. A jet engine comprising a shaft (14) driven by a low pressure turbine (12) in which the shaft is supported, at the rear, by a rolling bearing (20) housed in a lubricating chamber (24) in which an oil mist is maintained, said lubricating chamber comprising an inner rotating part linked to the shaft and an outer fixed part separated by a first annular seal (40), and a pressurized recovery chamber (26), arranged outside said first seal and comprising two parts, a fixed part and a moveable part separated by said first seal, where the low pressure turbine (12) is superimposed coaxially outside said shaft (14), the rolling bearing (20) is situated between said shaft and said low pressure turbine, said recovery chamber (26) is a single one and has a second seal (48), situated radially externally in relation to said first seal, said second seal (48) is situated downstream from the rotor of said turbine and an oil discharge orifice (52) is provided in the lower part of said recovery chamber (26).

2. The jet engine as claimed in claim 1, in which said low pressure turbine comprises a rotor provided with a plurality of axially spaced discs (29, 30), each having a reinforcing ring (29a, 30a) in its radially most inner part, wherein said second seal (48) is situated at a radial distance that is greater than that where the ring (30a) of the disc that is most downstream from said turbine is situated.

3. The jet engine as claimed in claim 2, **characterized in that** said second seal (48) is situated at a radial distance that is greater than that where a bore (57) of the ring (30) that is most downstream from said turbine is situated.

4. A jet engine according to any one of claims 1 to 3, **characterized in that** the recovery chamber (26) is the sole recovery chamber surrounding the lubricating chamber (24) and said shaft (14).

5. A jet engine according to any one of claims 2 to 4, **characterized in that** said first seal (40) is situated radially inside in relation to said ring (30a) of the disc the most downstream from said turbine.

6. A jet engine according to claim 1, wherein said low pressure turbine comprises a rotor provided with a plurality of axially spaced discs (29, 30) and each having a reinforcing ring (29a, 30a) in its radially most inner part, **characterized in that** said first seal (40) is situated radially inside in relation to a ring (30a) of the disc the most downstream from said turbine.
